# EUROPÄISCHE PATENTSCHRIFT

(11) **EP 1 537 167 B1**
(45) Veröffentlichungstag und Bekanntmachung des Hinweises auf die Patenterteilung: **21.05.2008**
(21) Anmeldenummer: 03794836.1
(22) Anmeldetag: 14.07.2003
(51) Int. Cl.: C08J 3/00

(54) **VERFAHREN ZUR REDUZIERUNG DER GRENZFLÄCHENREFLEXION VON KUNSTSTOFFSUBSTRATEN SOWIE DERART MODIFIZIERTES SUBSTRAT UND DESSEN VERWENDUNG**
METHOD FOR REDUCING BOUNDARY SURFACE REFLECTION OF PLASTIC SUBSTRATES AND SUBSTRATE MODIFIED IN SUCH A MANNER AND USE THEREOF
PROCEDE POUR REDUIRE LA REFLEXION DE SURFACE LIMITE DE SUBSTRATS EN MATIERE PLASTIQUE, SUBSTRAT AINSI MODIFIE ET SON UTILISATION

(30) Priorität: 09.09.2002 DE 10241708
(43) Veröffentlichungstag der Anmeldung: 08.06.2005
(73) Patentinhaber: Fraunhofer-Gesellschaft zur Förderung der angewandten Forschung e.V., 80686 München (DE)
(72) Erfinder: SCHULZ, Ulrike, 07751 Kunitz (DE); KAISER, Norbert, 07745 Jena (DE); MUNZERT, Peter, 07745 Jena (DE); SCHELER, Michael, 07745 Jena (DE); UHLIG, Hein, 07747 Jena (DE)
(74) Vertreter: Pfenning, Meinig & Partner GbR
(86) Internationale Anmeldenummer: PCT/EP2003/007583
(87) Internationale Veröffentlichungsnummer: WO 2004/024805

(56) Entgegenhaltungen:
- DE-A- 19 946 252
- US-A- 4 374 158
- PATENT ABSTRACTS OF JAPAN vol. 017, no. 338 (P-1564), 25. Juni 1993 (1993-06-25) & JP 05 045503 A (KONICA CORP), 23. Februar 1993 (1993-02-23)
- PATENT ABSTRACTS OF JAPAN vol. 016, no. 516 (P-1443), 23. Oktober 1992 (1992-10-23) & JP 04 191701 A (AKIFUMI NISHIKAWA;OTHERS: 03), 10. Juli 1992 (1992-07-10)
- S. BEISSWENGER, A. ZÖLLER: "Neues Plasmaverfahren für optische dünne Schichten" JOURNAL FÜR OBERFLÄCHENTECHNIK, 1995, Seiten 68-71,
- "Neues Plasmaverfahren für optische dünne Schichten", JOURNAL FÜR OBERFLÄCHENTECHNIK, 1995, Seiten 68-71, S.BEISSWENGER, A.ZÖLLER

## Beschreibung

Die Erfindung betrifft ein Verfahren zur Reduzierung der Grenzflächenreflexion von Polymersubstraten mittels Ionenbeschuß. Hierbei wird die Oberfläche des Substrates unter Ausbildung einer Brechzahlgradientenschicht modifiziert. Die Erfindung betrifft ebenso ein nach diesem Verfahren modifiziertes Substrat. Verwendung findet das Verfahren bei der Oberflächenentspiegelung von Optikelementen.

Optische Komponenten aus transparenten Kunststoffen finden eine immer größere Bedeutung. Die Funktionalität dieser Optiken kann durch eine Reduzierung der Oberflächenreflexionen wesentlich verbessert werden. Für die Entspiegelung von PMMA-Oberflächen sind bislang Entspiegelungsschichten, z. B. aus DE 43 25 011 und US 6,177,131 sowie Antireflexschichtensysteme, z. B. WO 97/48992 und EP 698 798 bekannt. Hierbei handelt es sich um Schichtsysteme aus mindestens einem weiteren Material, die auf das Substrat aufgebracht werden.

Eine weitere Alternative besteht darin, auf der Oberfläche Mikrostrukturen, z. B. Mottenaugenstrukturen aufzubringen. Diese Methoden sind aus A. Gombert, W. Glaubitt, Thin Solid Films 351 (1999) 73-78 und D. L. Brundrett, E. N. Glytsis, T. K. Gaylord, Applied Optics 16 (1994) 2695-2706 bekannt.

Alle hier beschriebenen Verfahren sind sehr aufwendig bezüglich der Herstellung reproduzierbarer Schichtdicken, der Haftung der aufgedampfter Schichten auf der PMMA-Oberfläche und der Präzision der Mikrostrukturen, um eine gute Entspiegelungswirkung zu erreichen. Insbesondere können Interferenzschichten zur Entspiegelung stets nur für einen schmalen Lichteinfallswinkelbereich optimiert werden.. Bei größeren Einfallswinkeln und außerhalb des meist auf den visuellen Spektralbereich begrenzten Wellenlängenbereiches entstehen meist erhöhte Restreflexionen. Somit ist die Entspiegelung von stark gekrümmten Linsen und von optischen Elementen mit Oberflächenstrukturen nur unzureichend gelöst.

Ausgehend hiervon war es Aufgabe der vorliegenden Erfindung, ein Verfahren zur Reduzierung der Grenzflächenreflexion bereitzustellen, mit dem Polymersubstrate auf einfache und damit kostengünstige Weise entspiegelt werden können. Gleichzeitig sollen derart hergestellte Substrate eine hohe Effizienz hinsichtlich der Transmissionsrate in einem sehr breiten Spektralbereich und weitestgehend unabhängig von Oberflächenstrukturen zeigen.

Diese Aufgabe wird durch das Verfahren mit den Merkmalen des Anspruchs 1 und die hierüber hergestellten Substrate mit den Merkmalen des Anspruchs 10 gelöst. Die Verwendung des Verfahrens wird in Anspruch 15 beschrieben. Die weiteren abhängigen Ansprüche zeigen vorteilhafte Weiterbildungen auf.

Erfindungsgemäß wird ein Verfahren zur Reduzierung der Grenzflächenreflexion von Polymersubstraten mittels Ionenbeschuß bereitgestellt. Bei diesem Verfahren wird mindestens eine Substratoberfläche mittels eines Argon/Sauerstoff-Plasmas unter Ausbildung einer Gradientenschicht, wobei sich der Gradient auf die Brechzahl bezieht, modifiziert. Eine Möglichkeit der Entspiegelung von Oberflächen von Polymersubstraten ist es, eine Brechzahlgradientenschicht aufzubringen oder zu erzeugen. Überraschenderweise konnte gezeigt werden, daß bei bestimmten Polymeren ein derartiger Brechzahlgradient durch einen geeigneten Plasmaätzvorgang ermöglicht wird, der eine graduell zur Grenzfläche immer locker werdende Oberflächenschicht bewirkt. Durch die Zugabe von Sauerstoff zu dem Argonplasma einer Plasmaionenquelle wird die Ätzcharakteristik stark beeinflußt.

Vorzugsweise wird mit dem Verfahren eine Reduzierung der Grenzflächenreflexion auf weniger als 2 %, bevorzugt weniger als 1,5 % im Wellenlängenbereich zwischen 400 nm und 1100 nm bzw. weniger als 1% im Wellenlängenbereich zwischen 420 nm und 860 nm erreicht.

Entscheidende Parameter bei der Verfahrensführung sind die Behandlungszeit sowie die Energie der auf das Substrat auftreffenden Ionen. Diese beiden Parameter beeinflussen die Schichtdicke der Gradientenschicht, wobei eine bestimmte Mindestdicke der Gradientenschicht notwendig ist, um die Reflexion der Grenzfläche des Polymersubstrats derart zu reduzieren. Wird eine bestimmte Modifizierungstiefe unterschritten, z. B. bei zu geringer Ionenenergie oder zu kurzer Behandlungszeit, nimmt die Reflexion im langwelligen Bereich des Spektrums stark zu. Eine Entspiegelungswirkung im kurzwelligen Bereich ist dagegen hier auch mit geringen Schichtdicken der Gradientenschicht erreichbar.

Die Modifizierung erfolgt durch Beschuß der Substratoberfläche mit energiereichen Ionen, welche mittels einer Plasma-Ionenquelle erzeugt werden.

Hinsichtlich der Plasmabehandlung kommen dabei alle aus dem Stand der Technik bekannten Standardprozesse der Beschichtungstechnik in Frage, solange sie eine entsprechende Charakteristik bezüglich der Art des Plasmas sowie der Ionenenergien aufweisen.

Vorzugsweise wird die Plasmabehandlung mit einem mit Sauerstoff versetzten DC-Argonplasma durchgeführt. Die Energie der beim Ionenbeschuß auf das Substrat auftreffenden Ionen liegt bevorzugt zwischen 100 eV und 150 eV, besonders bevorzugt zwischen 120 eV und 140 eV. Die Behandlungszeit beträgt dabei vorzugsweise 200 bis 400 s, besonders bevorzugt zwischen 250 und 350 s.

Vorzugsweise wird das verwendete Plasma mit mindestens 30 sccm Sauerstoff betrieben. Der Ionenbeschuß wird dabei im Vakuum durchgeführt, wobei ein Druck von etwa 3 x 10⁻⁴ mbar bevorzugt ist.

Als Polymersubstrate werden vorzugsweise Polymethylmethacrylat (PMMA) oder Methylmethacrylat-haltige Polymere, zu denen sowohl Co-Polymere als auch Blends zählen, eingesetzt. Ebenso ist es möglich als Polymersubstrat Diethylenglycolbisallylcarbonat (CR39) einzusetzten.

Wird als Polymer Polymethylmethacrylat (PMMA) eingesetzt, wird beim Ionenbeschuß eine Energie der auf das Substrat auftreffenden Ionen zwischen 100 eV und 160 eV, bevorzugt zwischen 120 und 140 eV gewählt und die Dauer des Ionenbeschußes beträgt zwischen 200 und 400 s, bevorzugt zwischen 250 und 350 s.

Wird als Polymer Diethylenglycolbisallylcarbonat (CR39) verwendet, wird beim Ionenbeschuß eine Energie der auf das Substrat auftreffenden Ionen von mindestens 120 eV, bevorzugt 150 eV gewählt, wobei die Dauer des Ionenbeschußes mindestens 500 s beträgt.

Gegenüber dem Stand der Technik weist das Verfahren den Vorteil auf, daß die gesamte Prozeßdauer im Vergleich zu einer Beschichtung wesentlich kürzer ist. Gleichzeitig ist die Entspiegelungswirkung gegenüber aufgedampften Antireflexschichtsystemen erheblich breitbandiger und stabiler bezüglich der Reproduzierbarkeit. Im Hinblick auf die Mikrostrukturierung von Kunststoffen durch Prägeverfahren sind bei der Plasmabehandlung auch gekrümmte Flächen oder Fresnelstrukturen problemlos und ohne zusätzlichen Aufwand zu entspiegeln.

Erfindungsgemäß werden ebenso die nach dem Verfahren hergestellten Substrate bereitgestellt. Diese weisen vorzugsweise an der Oberfläche eine auf < 2 %, bevorzugt auf < 1,5 % reduzierte Grenzflächenreflexion im Wellenlängenbereich zwischen 400 und 1100 nm auf.

Die Dicke derartiger Gradientenschichten muß mindestens 230 nm betragen, um die zuvor beschriebene Reduzierung der Grenzflächenreflexion zu gewährleisten.

Verwendung findet das Verfahren für Oberflächenentspiegelung beliebiger Massenbauteile aus polymeren Ausgangsmaterialien, da der Prozeß im Vergleich mit den üblichen Entspiegelungsverfahren sehr schnell, einfach und kostengünstig ist. Als beispielhafte Anwendungsfelder seien hier die Reflexminimierung auf der Innenseite von Handy-Displayabdeckung, die Entspiegelung von Fresnel-Linsen oder anderen, durch komplizierte Geometrien schwierig zu beschichtende oder zu strukturierende Optikelemente, die durch ihre Einbaulage nicht mechanischen Einwirkungen ausgesetzt sind.

Fig. 1 zeigt ein Transmissionsspektrum einer PMMA-Scheibe vor und nach der Plasmabehandlung.

Fig. 2 zeigt die Simulation eines Transmissionssprektrums einer Gradientenschicht mit einer Schichtdicke von 230 nm.

Fig. 3 zeigt ein Transmissionsspektrum einer CR39-Scheibe nach der Plasmabehandlung.

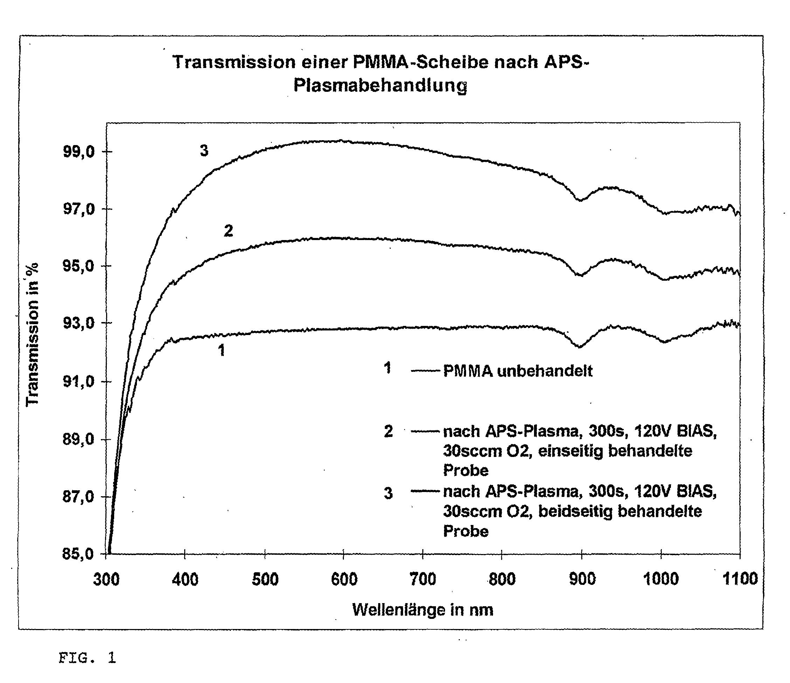

In Fig. 1 ist die spektrale Transmission einer PMMA-Scheibe vor und nach APS-Plasmabehandlung mit der Plasmaionenquelle der Vakuumbedampfungsanlage APS 904 (Leybold-Optics) dargestellt. Als Verfahrensparameter wurden 30 sccm Sauerstoff bei einer angelegten BIAS-Spannung von 120 V und einer Behandlungszeit von 300 s eingestellt. Die beidseitig entspiegelte Probe erreicht eine Transmission von mindestens 97 % über einen Wellenlängenbereich von 400 nm bis 1100 nm, mindestens 98 % von 420 nm bis 860 nm und mindestens 99 % von 490 nm bis 700 nm. Die Reproduzierbarkeit der Entspiegelung ist im Vergleich mit aufgedampften Antireflexschichtsystemen sehr gut.

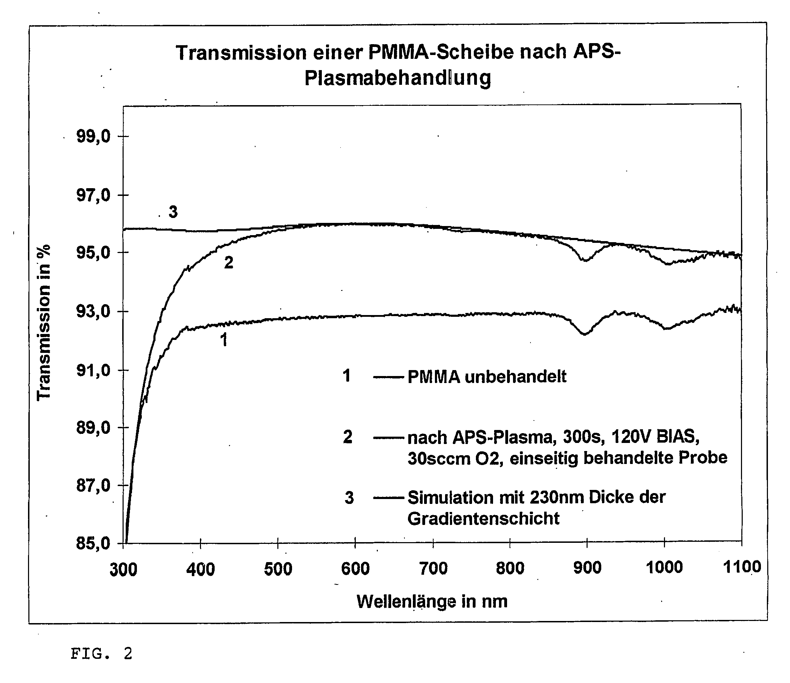

In Fig. 2 ist das Transmissionsspektrum einer unbehandelten PMMA-Scheibe (1) sowie einer einseitig oberflächenbehandelten PMMA-Scheibe (2) dargestellt. Gleichzeitig ist in dieser Figur ein mittels einer Simulationsrechnung ermitteltes Transmissionsspektrum einer Gradientenschicht mit 230 nm Dicke (3) dargestellt. Hierdurch wird verdeutlicht, dass die Schichtdicke der Gradientenschicht mindestens 230 nm betragen sollte um hohe Reduzierung der Grenzflächenreflexion zu erreichen.

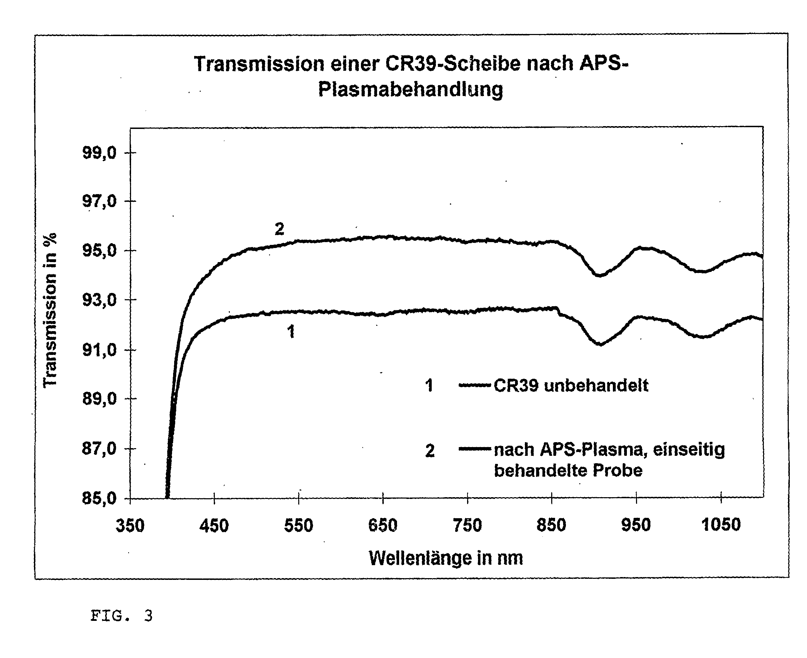

In Fig.3 ist das Transmissionsspektrum einer CR39-Scheibe vor und nach APF-Plasmabehandlung mit der Plasmaionenquelle APS 904 (Leybold-Optics) dargestellt. Die mittlere Transmissionszunahme einer einseitig entspiegelten Probe im Wellenlängenbereich von 450 nm - 800 nm beträgt etwa 2,8% gegenüber der unbehandelten Scheibe.

### Beispiel 1

Aufgrund seiner ausgezeichneten optischen Eigenschaften und des günstigen Verhaltens bei der Formgebung im Spritzgießprozess ist Polymethylmethacrylat (PMMA) besser als alle anderen bekannten Kunststoffe für präzisionsoptische Anwendungen geeignet. Die Funktionalität der Optiken kann durch eine Entspiegelung der Oberflächen wesentlich verbessert werden, z.B. kann die Transmission für sichtbares Licht bis auf 99% gesteigert werden. Die zu einer Entspiegelung der PMMA-Oberfläche führende Plasmabehandlung wird mittels der Plasmaionenquelle der Vakuumbedampfungsanlage APS 904 (Leybold-Optics) durchgeführt.

Spritzgegossene Proben aus PMMA werden unmittelbar nach der Herstellung in die Anlage eingebaut. Es wird auf 7 bis 8*10⁻⁶ mbar gepumpt. Um einen Entspiegelungseffekt zu erzielen muß dem DC-Argonplasma der APS-Quelle mindestens 30 sccm Sauerstoff zugelassen werden, wodurch der Druck während der Plasmabehandlung etwa 3*10⁻⁴ mbar beträgt. Bei geringeren Sauerstoffgehalten nimmt die Qualität der Entspiegelung stark ab. Die Energie der auf die Substrate auftreffenden Ionen sollte, um eine reproduzierbar gute Entspiegelungswirkung zu erreichen, mindestens 120 eV betragen. An der Anlage ist dies durch das Einstellen einer BIAS-Spannung von mind. 120 V möglich. Eine Erhöhung der BIAS-Spannung auf 150 V bringt keine weitere Reduzierung der Reflexion. Wird eine Behandlungszeit von 300 s deutlich unterschritten, verschlechtert sich der Entspiegelungseffekt, eine Erhöhung der Behandlungsdauer über 300 s bringt keine weitere Verbesserung der Entspiegelung. Behandlungszeiten über 400 s bei 120 V BIAS bewirken starke Streuverluste im kurzwelligen Spektralbereich.

### Beispiel 2

Poly-diethylenglycol-bis-allylcarbonat (CR39)ist ein duroplastischer vernetzter Kunststoff, der hauptsächlich für Brillengläser verwendet wird. Die zu einer Entspiegelung führende Plasmabehandlung wird mittels der Plasmaionenquelle der Vakuumbedampfungsanlage APS 904 (Leybold-Optics) durchgeführt. Nach Einbau der Proben in die Beschichtungsanlage in einem Abstand von ca. 70 cm von der Ionenquelle mindestens in einen Druckbereich von 10⁻⁵ mbar gepumpt. Ein Entspiegelungseffekt wird schon erzielt, wenn die APS-Quelle mindestens 500 s mit reinem Argon und einer Bias-Spannung von 150 V (maximale Energie der Ar-Ionen 150eV) betrieben wird. Der Entspiegelungseffekt wird besser, wenn die Behandlungszeit bis auf maximal 1000 s verlängert wird. Bei Verwendung einer Mischung von 1:1 bis 2:1 Sauerstoff/Argon wird der Entspiegelungseffekt schon nach wesentlich kürzerer Behandlungszeit erzielt. Die Energie der auf die Substrate auftreffenden Ionen muss, um eine reproduzierbar gute Entspiegelungswirkung zu erreichen, mindestens 120 eV betragen. Eine sehr gute Entspiegelungswirkung wird bei einer Behandlungszeit von 500 s und einer 2:1 Mischung Sauerstoff/Argon bei einem Druck in der Anlage von 3*10-4 mbar und einer Ionenenergie von 150 eV erhalten. Die mittlere Transmissionszunahme einer einseitig entspiegelten Probe im Wellenlängenbereich von 450 nm bis 800 nm, beträgt dann 2.8%.

## Patentansprüche

1. verfahren zur Reduzierung der Grenzflächenreflexion von Polymersubstraten auf weniger als 2 % im Wellenlängenbereich zwischen 400 nm und 1100 nm unter Ausbildung einer Brechzahlgradientenschicht mittels Ionenbeschuss mit energiereichen Ionen, welche mittels eines Argon/Sauerstoff-Plasmas als Plasma-Ionenquelle erzeugt werden, wobei die beim Ionenbeschuss auf mindestens eine Substratoberfläche auftreffenden Ionen eine Energie zwischen 100 eV und 160 eV aufweisen und die Dauer des Ionenbeschusses zwischen 200 und 600 s beträgt und der Ionenbeschuss durchgeführt wird, bis eine Brechzahlgradientenschieht mit einer Schichtdicke von mindestens 230 nm ausgebildet worden ist.

2. Verfahren nach Anspruch 1,
**dadurch gekennzeichnet, dass** mit dem Verfahren eine Reduzierung der Grenzflächenreflexion auf weniger als 1,5 % im Wellenlängenbereich zwischen 420 nm und 860 nm erreicht wird.

3. Verfahren nach mindestens einem der vorhergehenden Ansprüche,
**dadurch gekennzeichnet, dass** die beim Ionenbeschuß auf das Substrat auftreffenden Ionen eine Energie zwischen 120 und 140 eV aufweisen.

4. Verfahren nach mindestens einem der vorhergehenden Anspruch,
**dadurch gekennzeichnet, dass** die Dauer des Ionenbeschußes zwischen 250 und 350 s beträgt.

5. Verfahren nach mindestens einem der vorhergehenden Ansprüche,
**dadurch gekennzeichnet, dass** die Plasma-Ionenquelle mit mindestens 30 sccm Sauerstoff betrieben wird.

6. Verfahren nach mindestens einem der vorhergehenden Anspruche,
**dadurch gekennzeichnet, dass** der Ionenbeschuß bei einem Druck von etwa 3*10⁻⁴ mbar durchgeführt wird.

7. Verfahren nach mindesten einem der vorhergehenden Ansprüche,
**dadurch gekennzeichnet, dass** als Polymersubstrate Polymethylmethacrylate (PMMA), methylmethacrylat-haltige Polymere oder Diethylenglycolbisallylcarbonat (CR39) verwendet werden.

8. Verfahren nach Anspruch 7,
**dadurch gekennzeichnet, dass** als Polymer Polymethylmethacrylat (PMMA) verwendet wird, die beim Ionenbenschuß auf das Substrat auftreffenden Ionen eine Energie zwischen 100 eV und 160 eV, bevorzugt zwischen 120 und 140 eV aufweisen und die Dauer des Ionenbeschußes zwischen 200 und 400 s, bevorzugt zwischen 250 und 350 s beträgt.

9. Verfahren nach Anspruch 7,
**dadurch gekennzeichnet, dass** als Polymer Diethylenglycolbisallylcarbonat (CR39) verwendet wird, die beim Ionenbeschuß auf das Substrat auftreffenden Ionen eine Energie von mindestens 120 eV, bevorzugt 150 eV aufweisen und die Dauer des Ionenbeschußes mindestens 500 s beträgt.

10. Oberflächenmodifiziertes Substrat aus einem Polymer, insbesondere Polymethylmethacrylat (PMMA), methylmethacrylat-haltige Polymere oder Diethylenglycolbisallylcarbonat (CR39), behandelt mit dem Verfahren nach mindestens einem der vorhergehenden Ansprüche.

11. Oberflächenmodifiziertes Substrat nach Anspruch 10,
**dadurch gekennzeichnet, dass** die mindestens ein Substratoberfläche eine auf weniger als 2 % reduzierte Grenzflächenreflexion im Wellenlängenbereich zwischen 400 und 1100 nm aufweist.

12. Oberflächenmodifiziertes Substrat nach mindestens einem der Ansprüche 10 oder 11,
**dadurch gekennzeichnet, dass** die schichtdicke der Gradientenschicht mindestens 230 nm beträgt.

13. Oberflächenmodifiziertes Substrat nach mindestens einem der Ansprüche 10 bis 12,
**dadurch gekennzeichnet, dass** ein einseitig modifiziertes Polymethylmethacrylat-Substrat eine Transmission von mindestens 95 % aufweist.

14. Oberflächenmodifiziertes Substrat nach mindestens einem der Ansprüche 11 bis 13,
**dadurch gekennzeichnet, dass** ein beidseitig modifiziertes Polymethylmethacrylat-Subetrat eine Transmission von mindestens 97 % im Wellenlängenbereich von 400 nm bis 1100 nm aufweist.

15. Verwendung des Verfahrens nach mindestens einem der Ansprüche 1 bis 9 zur Reflexminderung von Optikelementen, z.B. Fresnellinsen.

## Claims

1. A method of reducing the boundary surface reflection of polymer substrates to less than 2% in the wavelength range between 400 nm and 1100 nm by formation of a refractive-index gradient layer by means of ion bombardment with energy-rich ions which are generated by means of an argon/oxygen plasma serving as a plasma ion source, wherein the ions striking at least one substrate surface during ion bombardment have an energy between 100 eV and 160 eV, and the duration of the ion bombardment is between 200 s and 600 s, and the ion bombardment is carried out until a refractive-index gradient layer with a layer thickness of at least 230 nm has been formed.

2. A method according to claim 1, **characterised in that**, using the method, a reduction of the boundary surface reflection to less than 1.5% in the wavelength range between 420 nm and 860 nm is achieved.

3. A method according to at least one of the preceding claims, **characterised in that** the ions striking the substrate during ion bombardment have an energy between 120 eV and 140 eV.

4. A method according to at least one of the preceding claims, **characterised in that** the duration of the ion bombardment is between 250 s and 350 s.

5. A method according to at least one of the preceding claims, **characterised in that** the plasma ion source is operated with at least 30 sccm of oxygen.

6. A method according to at least one of the preceding claims, **characterised in that** the ion bombardment is carried out at a pressure of approximately 3*10⁻⁴ mbar.

7. A method according to at least one of the preceding claims, **characterised in that** polymethyl methacrylates (PMMA), methyl methacrylate-containing polymers or diethylene glycol bisallyl carbonate (CR39) are used as polymer substrates.

8. A method according to claim 7, **characterised in that** polymethyl methacrylate (PMMA) is used as a polymer, the ions striking the substrate during ion bombardment have an energy between 100 eV and 160 eV, preferably between 120 eV and 140 eV, and the duration of the ion bombardment is between 200 s and 400 s, preferably between 250 s and 350 s.

9. A method according to claim 7, **characterised in that** diethylene glycol bisallyl carbonate (CR39) is used as a polymer, the ions striking the substrate during ion bombardment have an energy of at least 120 eV, preferably 150 eV, and the duration of the ion bombardment is at least 500 s.

10. A surface-modified substrate comprising a polymer, especially polymethyl methacrylate (PMMA), methyl methacrylate-containing polymers or diethylene glycol bisallyl carbonate (CR39), treated by the method according to at least one of the preceding claims.

11. A surface-modified substrate according to claim 10, **characterised in that** the at least one substrate surface has a boundary surface reflection reduced to less than 2% in the wavelength range between 400 nm and 1100 nm.

12. A surface-modified substrate according to at least one of claims 10 and 11, **characterised in that** the layer thickness of the gradient layer is at least 230 nm.

13. A surface-modified substrate according to at least one of claims 10 to 12, **characterised in that** a polymethyl methacrylate substrate modified on one side has a transmittance of at least 95%.

14. A surface-modified substrate according to at least one of claims 11 to 13, **characterised in that** a polymethyl methacrylate substrate modified on both sides has a transmittance of at least 97% in the wavelength range from 400 nm to 1100 nm.

15. Use of the method according to at least one of claims 1 to 9 for reducing the reflection of optical elements, e.g. Fresnel lenses.

## Revendications

1. Procédé pour la réduction de la réflexion interfaciale de substrats polymères, à moins de 2 % dans la plage de longueurs d'onde comprise entre 400 nm et 1 100 nm, avec formation d'une couche de gradient d'indice de réfraction au moyen de bombardement d'ions avec des ions à haute énergie qui sont produits par un plasma argon/oxygène en tant que source d'ions à plasma, les ions venant frapper sur au moins une surface du substrat lors du bombardement d'ions ayant une énergie comprise entre 100 eV et 160 eV et la durée du bombardement d'ions étant comprise entre 200 et 600 secondes, et le bombardement d'ions étant effectué jusqu'à ce que soit formée une couche de gradient d'indice de réfraction ayant une épaisseur de couche d'au moins 230 nm.

2. Procédé selon la revendication 1, **caractérisé en ce qu'**on parvient avec le procédé à une réduction de la réflexion interfaciale à moins de 1,5 % dans la plage de longueurs d'onde comprise entre 420 nm et 860 nm.

3. Procédé selon au moins l'une des revendications précédentes, **caractérisé en ce que** les ions venant frapper sur le substrat lors du bombardement d'ions ont une énergie comprise entre 120 et 140 eV.

4. Procédé selon au moins l'une des revendications précédentes, **caractérisé en ce que** la durée du bombardement d'ions est comprise entre 250 et 350 secondes.

5. Procédé selon au moins l'une des revendications précédentes, **caractérisé en ce que** la source d'ions à plasma est mise en action avec au moins 30 cm³.s d'oxygène.

6. Procédé selon au moins l'une des revendications précédentes, **caractérisé en ce que** le bombardement d'ions est effectué sous une pression d'environ 3.10⁻⁴ mbar.

7. Procédé selon au moins l'une des revendications précédentes, **caractérisé en ce qu'**on utilise comme substrats polymères des poly(méthacrylate de méthyle)s (PMMA), des polymères contenant du méthacrylate de méthyle, ou du bisallylcarbonate de diéthylèneglycol (CR39).

8. Procédé selon la revendication 7, **caractérisé en ce qu'**on utilise comme polymère du poly(méthacrylate de méthyle) (PMMA), les ions venant frapper sur le substrat lors du bombardement d'ions ont une énergie comprise entre 100 eV et 160 eV, de préférence entre 120 et 140 eV, et la durée du bombardement d'ions est comprise entre 200 et 400 secondes, de préférence entre 250 et 350 secondes.

9. Procédé selon la revendication 7, **caractérisé en ce qu'**on utilise comme polymère du bisallylcarbonate de diéthylèneglycol (CR39), les ions venant frapper sur le substrat lors du bombardement d'ions ont une énergie d'au mois 120 eV, de préférence 150 eV, et la durée du bombardement d'ions est d'au moins 500 secondes.

10. Substrat modifié en surface, à base d'un polymère, en particulier de poly(méthacrylate de méthyle) (PMMA), de polymères contenant du méthacrylate de méthyle ou de bisallylcarbonate de diéthylèneglycol (CR39), traité par le procédé selon au moins l'une des revendications précédentes.

11. Substrat modifié en surface, selon la revendication 10, **caractérisé en ce que** ladite au moins une surface du substrat présente une réflexion interfaciale réduite à moins de 2 % dans la plage de longueurs d'onde comprise entre 400 et 1 100 nm.

12. Substrat modifié en surface, selon au moins l'une des revendications 10 et 11, **caractérisé en ce que** l'épaisseur de couche de la couche de gradient est d'au moins 230 nm.

13. Substrat modifié en surface, selon au moins l'une des revendications 10 à 12, **caractérisé en ce qu'**un substrat poly(méthacrylate de méthyle) modifié d'un côté présente une transmission d'au moins 95 %.

14. Substrat modifié en surface, selon au moins l'une des revendications 11 à 13, **caractérisé en ce qu'**un substrat poly(méthacrylate de méthyle) modifié des deux côtés présente une transmission d'au moins 97 % dans la plage de longueurs d'onde de 400 nm à 1 100 nm.

15. Utilisation du procédé selon au moins l'une des revendications 1 à 9, pour la réduction de la réflexion d'éléments optiques, par exemple de lentilles de Fresnel.
